# EUROPÄISCHE PATENTSCHRIFT

(11) **EP 0 756 740 B1**
(45) Veröffentlichungstag und Bekanntmachung des Hinweises auf die Patenterteilung: **30.12.1998**
(21) Anmeldenummer: 95918569.5
(22) Anmeldetag: 19.04.1995
(51) Int. Cl.: G10K 11/18

(54) **VERFAHREN UND VORRICHTUNG ZUM ABTASTEN EINES ULTRASCHALLFELDES**
PROCESS AND DEVICE FOR TRACING AN ULTRASOUND FIELD
PROCEDE ET DISPOSITIF PERMETTANT DE BALAYER UN CHAMP ULTRASONORE

(30) Priorität: 22.04.1994 DE 4414081; 06.12.1994 US 349880
(43) Veröffentlichungstag der Anmeldung: 05.02.1997
(73) Patentinhaber: Sonindent Anstalt Liechtensteinischen Rechts, 9490 Vaduz (LI)
(72) Erfinder: BICZ, Wieslaw, PL-52-011 Wroclaw (PL)
(74) Vertreter: Funck-Hartherz, Anna-Eleonore, Dipl.-Phys.
(86) Internationale Anmeldenummer: EP9501465
(87) Internationale Veröffentlichungsnummer: WO9529478

(56) Entgegenhaltungen:
- EP-A- 0 144 761
- EP-A- 0 189 756
- EP-A- 0 293 996
- GB-A- 2 170 906
- JOURNAL OF THE ACOUSTICAL SOCIETY OF AMERICA, Bd. 81, Nr. 5, Mai 1987 NEW YORK US, Seiten 1273-1278, SAFAAI-JAZI ET AL. 'Analysis of liquid-core cylindrical acoustic waveguides'

## Beschreibung

Die Erfindung bezieht sich auf ein Verfahren und eine Vorrichtung zum Abtasten eines Ultraschallfeldes.

Die Abtastung von Ultraschallfeldern, wie sie beispielsweise zur Überprüfung der Leistungsfähigkeit von Ultraschallfeldern oder bei Geräten zum Erkennen von Oberflächen und oberflächennahen Strukturen von Objekten gebraucht werden, erfolgt bisher über Empfangswandler (Transducer), die die von dem zu messenden Objekt zurückgesandten Ultraschallwellen in elektrische Signale umwandeln und zur Auswertung weiterleiten. Da je nach der Leistungsfähigkeit der Ultraschallquelle oder abhängig von der Struktur des zu untersuchenden Objekts die Intensität der ausgesandten bzw. rückgestreuten und reflektierten Ultraschallwellen variiert, ist es nötig, zahlreiche Wandler (Transducer) einzusetzen, um die rückgesandten Wellen in allen Richtungen aufnehmen zu können. Es hat sich dabei herausgestellt, daß eine Kreisanordnung von einer Vielzahl von Empfangswandlern, ca. 250 in der Größenordnung von 1 mm Durchmesser eine ausreichende Messung und Darstellung der aus- bzw. rückgesandten Ultraschallwellen ermöglichen.

Die Vielzahl der bei den bekannten Vorrichtungen notwendigen Wandler macht deren Anordnung kompliziert und kostspielig, so daß auf dieser Basis eine Fertigung von Seriengeräten zum Abtasten von Ultraschallfeldern ungeeignet ist.

Die Erfindung hat sich deshalb die Aufgabe gestellt, eine Möglichkeit zu schaffen, durch die die Anzahl der eingesetzten Empfangswandler reduziert werden kann.

Gemäß der Erfindung wird vorgeschlagen, gemäß dem Hauptanspruch zu verfahren. Zufolge dessen werden die Ultraschallwellen unterschiedlich bemessenen, ihre Schallaufzeit verlängernden Maßnahmen unterworfen und die Schallwellen ob originär im Medium erzeugt oder reflektiert bzw. gestreut an verschiedenen Austrittsstellen aufgefangen und dann auf unterschiedlich langen Wegen nacheinander einem einzigen oder einigen wenigen Wandlern (Empfangstransducern) zugeführt. Dabei wird die Tatsache ausgenutzt, daß es im Ultraschallbereich möglich ist, durch unterschiedliche, die Schallaufzeit verlängernde Wege, die den Schallwellen aus den verschiedenen Richtungen aufgezwungen werden, diese zeitlich nacheinander an einen einzigen oder einigen wenigen Wandlern ankommen zu lassen.

Auf diese Weise kann die Zahl der Empfangswandler wesentlich reduziert werden.

Diese Wegverlängerung der aus den einzelnen Richtungen kommenden Schallwellen kann auf verschiedene Weise erfolgen. Die aus verschiedenen Richtungen kommenden Ultraschallwellen können von einem Satz in unterschiedlichen Entfernungen und an unterschiedlichen Stellen gegenüber dem Medium bzw. einem Objekt, das sie aussendet, angeordneten Spiegeln derart aufgenommen werden, daß die Wellen unterschiedlich lange Schallaufzeiten bis zu einem einzigen oder einigen wenigen Empfangswandlern zurückzulegen haben. Eine andere Möglichkeit besteht darin, daß ein Empfangswandler mit den abzustastenden Stellen des Ultraschallfeldes über Wellenleiter, in denen unterschiedliche Schallaufzeiten vorliegen, verbunden ist.

Die Vorrichtungen zur Durchführung der Anordnung von Spiegeln basierenden Verfahrens besteht darin, daß die Spiegel sich jeweils gegenüber den abzutastenden Stellen des Ultraschallfeldes befinden und so räumlich verteilt und orientiert sind, daß die Ultraschallwellen den Empfangswandler über die Spiegel mit unterschiedlichen Schallaufzeiten beaufschlagen. Bei der Verwendung von Wellenleitern werden die Ultraschallwellen an den abzutastenden Stellen über Auffangmittel in die Wellenleiter eingespeist und einem oder mehreren Empfangswandlern zwecks Auswertung zugeführt werden. Die unterschiedlichen Schallaufzeiten können entweder mit gleichen Wellenleitern unterschiedlicher Länge oder mit gleichlangen Wellenleitern mit pro Zeiteinheit unterschiedlichen Schallaufzeiten erreicht werden. Wellenleiter mit unterschiedlichen Schallaufzeiten können auch dadurch erhalten werden, daß die Ultraschallwellen zunächst in gleichlange Wellenleiter eingespeist werden, die dann nacheinander einem gemeinsamen Kanal zugeführt werden.

Es hat sich überraschend gezeigt, daß die Spiegel oder Wellenleiter in einem Flüssigkeitsmedium vorgesehen sein können. Die Wellenleiter lassen sich auch in einem festen Material anordnen.

In der Zeichnung sind Vorrichtungen schematisch gezeigt, die mit denen des erfindungsgemäßen Verfahrens durchgeführt werden kann. Dabei zeigen:
- Fig. 1: eine Vorrichtung, bei der die Wegverlängerung mittels eines Satzes Spiegel erfolgt,
- Fig. 2: die schematische Darstellung mit verschieden lang bemessenen Mellenleitern,
- Fig. 3: eine Modifikation der Darstellung gemäß Fig. 2.

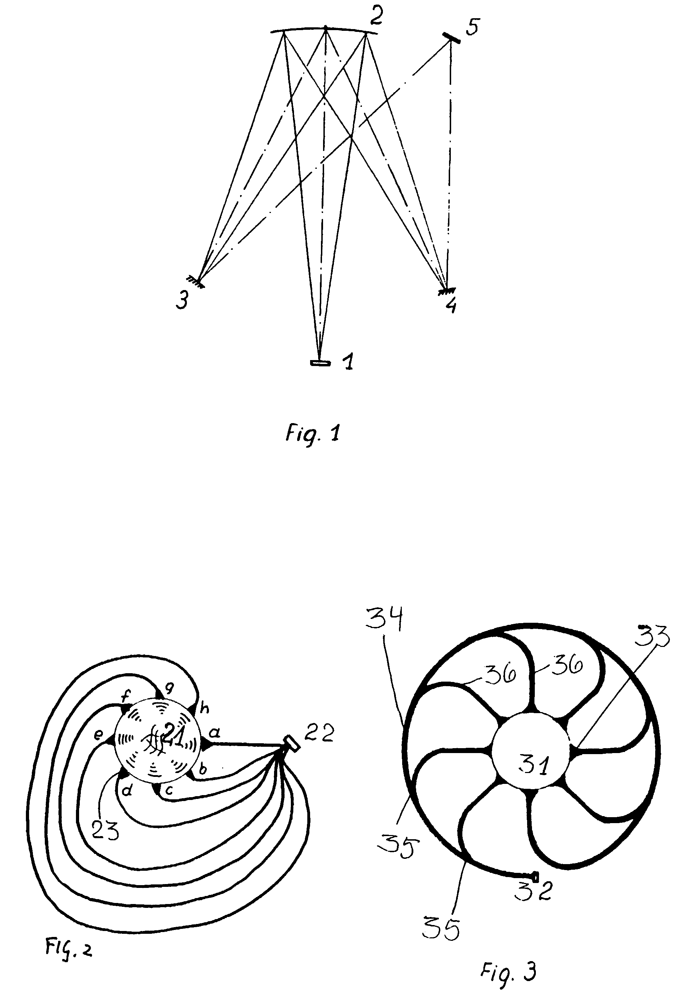

Fig. 1 zeigt in schematischer Darstellung die Wegverlängerung von Ultraschallwellen mittels einem Satz verschieden angeordneter Spiegel. Mit dem Bezugszeichen 1 ist ein Ultraschallsender bezeichnet. Die von dem Sender 1 ausgesandten Wellen treffen auf eine Platte 2 aus Glas, die beispielsweise auch mit einem Objekt bestückt sein kann. Von der Auflageplatte werden die von den einzelnen Punkten der Platte bzw. des Objektes kommenden Wellen auf die Spiegel 3 und 4 geleitet und von dort nacheinander auf den Empfangswandler 5 reflektiert. Die Wellen bewegen sich somit von dem Sender 1 über die Platte 2 und den Spiegel 3 zum Empfänger 5 und außerdem über den Spiegel 4 auch zu dem Empfänger 5. In jedem dieser Fälle ist der Weg anders.

Die Spiegel sind stets gegenüber von dem Medium oder Objekt an den abzutastenden Punkten angeordnet, also an den Punkten, an denen das Ultraschallfeld abgetastet werden soll.

In Fig. 2 ist eine Darstellung unter Verwendung von Wellenleitern gezeigt. Die aus dem Medium 21, das beispielsweise eine Auflageplatte für irgendein Objekt sein kann, austretenden Ultraschallwellen eines wie auch immer gearteten Ursprungs werden in, an dem Medium 21 angeordnete Auffangmittel 23 geleitet und damit den sich daran anschließenden Wellenleitern a bis h zuführt. Diese Wellenleiter sind unterschiedlich lang bemessen, haben also unterschiedliche Schallaufzeiten. Wie aus der Zeichnung ersichtlich, ist a der kürzeste und h der längste Wellenleiter. Es hat sich gezeigt, daß die Wellenleiter sich bei der Ermittlung von Fingerabdrücken in ihrer Länge um vorzugsweise 1 m unterscheiden sollten. Wellenleiter b ist also 1 m länger als a und c wieder 1 m länger als b und so fort. Alle Wellenleiter münden in den Empfangswandler 22 ein. Der Unterschied der Wellenleiter von ca. 1 m reicht bei der genannten Anwendung aus, um die von den einzelnen Richtungen kommenden Wellen differenziert an den Wandler 22 zu leiten, der dann entsprechende Signale weitergibt. Auf diese Weise werden die in verschiedene Richtungen rückgesandten Wellen getrennt voneinander ausgewertet. Der Längenunterschied der einzelnen Wellenleiter ist jeweils den verschiedenen zu erfassenden Objekten anzupassen. Anstelle der Anordnung mit verschiedenen langen Wellenleitern können auch gleichlange Wellenleiter herangezogen werden, die pro Zeiteinheit unterschiedliche Schallaufzeiten besitzen. Diese unterschiedlichen Schallaufzeiten können durch in ihrem Querschnitt dickere Wellenleiter oder Wellenleiter aus unterschiedlichen Materialien erreicht werden.

Fig. 3 zeigt eine Abwandlung der Fig. 2. Dabei werden die von dem Medium 31 ausgesandten Wellen über in unterschiedlichen Richtungen angeordneter Auffangmittel 33 gleichlangen Wellenleitern 36 zugeleitet. Die Wellenleiter 36 münden nacheinander in einen gemeinsamen Wellenleiter 34, der mit dem Empfangswandler 32 verbunden ist. Der Abstand zwischen den Mündungsstellen 35 der einzelnen Wellenleiter 36 ist so bemessen, daß die Signale der einzelnen Wellenleiter 36 voneinander getrennt und nacheinander den Wandler 32 zwecks Weitergabe entsprechender Signale erreichen.

Die Ausführungen der Figuren 1, 2 und 3 können in einer Flüssigkeit, z.B. Wasser angeordnet sein.

Es hat sich gezeigt, daß die Wellenleiter gemäß den Figuren 2 und 3 aus mit Flüssigkeit gefüllten Röhrchen oder einem wie auch immer gearteten Mantel oder aus einem Festkörpermaterial, wie z.B. Glas oder Metall, bestehen können.

## Patentansprüche

1. Verfahren zum örtlichen Abtasten eines in einem Medium zu einem bestimmten Zeitpunkt bestehenden Ultraschallfeldes mittels eines Empfangswandlers (5; 22; 32),
**dadurch gekennzeichnet,**
daß die das Medium (2, 21, 31) verlassenenden Ultraschallwellen ab ihren Austrittsbereichen unterschiedlichen ihre Schallaufzeit verlängernden Maßnahmen unterworfen und danach dem Empfangswandler (5; 22; 32) zugeführt werden.

2. Vorrichtung zur Durchführung des Verfahrens nach Anspruch 1,
**dadurch gekennzeichnet,**
daß sich Spiegel (3, 4) an den abzutastenden Stellen des Ultraschallfeldes befinden, die räumlich so verteilt und orientiert sind, daß die Ultraschallwellen den Empfangswandler (5) über die Spiegel (3, 4) mit unterschiedlichen Schallaufzeiten beaufschlagen.

3. Vorrichtung zur Durchführung des Verfahrens nach Anspruch 1,
**dadurch gekennzeichnet,**
daß der Empfangswandler (22, 32) über Wellenleiter (a, ...h; 36, 34), in denen unterschiedliche Schallaufzeiten vorliegen, mit den abzutastenden Stellen des Ultraschallwellenfeldes verbunden ist.

4. Vorrichtung nach Anspruch 3,
**dadurch gekennzeichnet,**
daß die Ultraschallwellen zu den abzutastenden Stellen über Auffangmittel (23) in die Wellenleiter (a, ...h; 36, 34) einspeisbar sind.

5. Vorrichtung nach Anspruch 4,
**dadurch gekennzeichnet,**
daß gleichlange Wellenleiterabschnitte (36) mit den Auffangmitteln verbunden sind, und daß die den Auffangmitteln abgewandten Enden der Wellenleiterabschnitte (36) mit einem gemeinsamen Wellenleiter (34), dessen eines Ende den Empfangswandler (32) beaufschlagt, an unterschiedlichen Längspositionen verbunden sind.

6. Vorrichtung nach einem der Ansprüche 3 bis 5,
**dadurch gekennzeichnet,**
daß die Wellenleiter (a, ...h, 36) Flüssigkeit enthalten.

7. Vorrichtung nach einem der Ansprüche 3 bis 5,
**dadurch gekennzeichnet,**
daß die Wellenleiter (a, ...h; 36, 34) aus einem Festkörpermaterial bestehen.

8. Vorrichtung nach einem der Ansprüche 2 bis 7,
**gekennzeichnet durch**
weitere, analog zum Empfangswandler (5; 22; 32) an das Ultraschallfeld angeschlossene Empfangswandler.

## Claims

1. Method for local scanning of a ultrasonic field which consits at a certain time in a medium by means of a receiving transducer
characterized in that
the ultrasonic waves leaving the medium (2; 21; 31) will be subject to different measures extending the running time of the sound and than directed to the receiving transducer (5; 22; 32).

2. Device to realize the method according the patent claim 1
characterized in that
mirrors (3; 4) are arranged and orientated in physical conditions with the effect that the ultrasonic waves arrive at the receiving transducer (5) by the mirrors (3; 4) with different running times of the sound.

3. Device to realize the method according the patent claim 1
characterized in that
the receiving transducer (22; 32) is connected by conductors of the waves (a, ...h, 36; 34) with different running times of the sound with the places of the ultrasonic field needed to be scanned.

4. Device according patent claim 3,
characterized in that
the ultrasonic waves ca be feeded to the conductors of the waves (a, ...h; 36; 34) by means of collecting means (23) to the places needed to be scanned.

5. Device according patent claim 4
characterizied in that
sectors of the wave conductors with identic length (36) are connected with the collecting means and that the ends of the sectors of the wave conductors ate the opposit side of the collecting means (36) are connected with a common wave conductor (34) at different length positions of which one end is arriving at the receiving transducer (32).

6. Device according to one of the patent claims 3 to 5
characterized in that
the wave conductors (a, ...h; 36) are containing in liquid.

7. Device according to one of the patent claims 3 to 5
that the wave conductours (a, ...h; 36; 34) are consisting of a solid.

8. Device according to one of the patent claims 2 to 7
characterized by other receiving transducers connected with the ultrasonic field analogous to the receiving transducer (5; 22; 32).

## Revendications

1. Procédé pour l'analyse locale d'un champ ultrasonique consistant à un moment précis dans un milieu à l'aide d'un transducteur récepteur (5, 22, 32) caractérisé par le fait,
que les ondes ultrasonores quittants le milieu (2;21;31) sont traites avec des mesures differentes pour allonger le temps de leur propagation du son et ensuite sont conduites au transducteur récepteur (5; 22; 32).

2. Dispositif pour la réalisation du procédé après revendication 1,
caractérise par le fait,
qu'il y a des miroirs (3; 4) aux endroits du champ ultrasonique qu'il faut analyser qui sont placés et centrés avec l'effet que les ondes ultrasonores augment le transducteur récepteur (5) par les miroirs (3; 4) avec durées differentes du son.

3. Dispositif pour la réalisation du procédé après revendication 1,
caractérise par le fait,
que le transducteur récepteur (22; 32) est relié par Conducteurs des ondes (a,...h; 36; 34) avec durées differentes du son avec les endroits du champ ultrasonique qu'il faut analyser.

4. Dispositif pour la réalisation du procédé après revendication 3,
caracterisé par le fait,
que les ondes ultrasoniques peuvent etre introduites aux endroits qu'il faut analyser dans les conducteurs des ondes (a,...h;36;34;) à l'aide des moyens recueillants (23).

5. Dispositif pour la réalisation du procédé après revendication 4,
caractérise par le fait,
que des sections des conducteurs des ondes qui sont une longueur identique (36) sont relié avec les moyens recueillants et que les bouts des sections des conducteurs des ondes (36) qui se ne trouvent pas au côté des conducteurs des ondes sont relié aux positions longitudinales differentes avec un conducteur des ondes commun (34) don't un bout arrivent au transducteur recepteur (32).

6. Dispositif après une des revendications 3 - 5,
caractérise par le fait,
que les conducteurs des ondes (a,...h; 36) continent du liquide.

7. Dispositif après une des revendications 3 - 5,
caractérise par le fait,
que les conducteurs des ondes (a,...h; 36; 34) consistent du material solide.

8. Dispositif après une des revendications 2 - 7,
caractérise par des autres transducteurs recepteurs qui sont relies au champ ultrasonique analogue au transducteur recepteur (5; 22; 32).
